# EUROPÄISCHE PATENTSCHRIFT

(11) **EP 3 218 321 B1**
(45) Veröffentlichungstag und Bekanntmachung des Hinweises auf die Patenterteilung: **04.07.2018**
(21) Anmeldenummer: 15790113.3
(22) Anmeldetag: 03.11.2015
(51) Int. Cl.: C04B 24/04

(54) **POLYMER MIT POLYETHERSEITENKETTEN**
POLYMER WITH POLYETHER SIDE CHAINS
POLYMÈRE ÉQUIPÉ DE CHAÎNES LATÉRALES DE POLYÉTHER

(30) Priorität: 10.11.2014 EP 14192482
(43) Veröffentlichungstag der Anmeldung: 20.09.2017
(73) Patentinhaber: BASF SE, 67056 Ludwigshafen am Rhein (DE)
(72) Erfinder: BICHLER, Manfred, 84549 Engelsberg (DE); WINKLBAUER, Martin, 84553 Halsbach (DE); DENGLER, Joachim, 83342 Tacherting (DE)
(74) Vertreter: BASF IP Association
(86) Internationale Anmeldenummer: PCT/EP2015/075532
(87) Internationale Veröffentlichungsnummer: WO 2016/074984

(56) Entgegenhaltungen:
- EP-A1- 1 052 232
- FR-A1- 2 993 278

## Beschreibung

Die Erfindung betrifft ein Polymer, welches durch Copolymerisation von Monomeren, erhältlich ist, umfassend mindestens ein ethylenisch ungesättigtes Monomer, welches mindestens eine Säuregruppe umfasst und mindestens ein ethylenisch ungesättigtes Monomer mit Polyethergruppen mit 5 bis 35 Wiederholungseinheiten und mindestens ein ethylenisch ungesättigtes Monomer mit Polyethergruppen mit 45 bis 150 Wiederholungseinheiten. Weiterhin wird die Verwendung des erfindungsgemäßen Polymers als Zusatzmittel für anorganische Bindemittelzusammensetzungen sowie eine pulverförmige Zusammensetzung, umfassend ein anorganisches Bindemittel und das erfindungsgemäße Polymer, offenbart.

Um eine verbesserte Verarbeitbarkeit, d. h. Knetbarkeit, Streichfähigkeit, Spritzbarkeit, Pumpbarkeit oder Fließfähigkeit, anorganischer Feststoffsuspensionen zu erreichen, werden diesen oft Zusatzmittel in Form von Dispergier- oder Fließmitteln zugesetzt.

Derartige anorganische Feststoffe umfassen in der Bauindustrie meistens anorganische Bindemittel wie z.B. Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement, Spezialzemente, Calciumsulfat-n-Hydrat (n=0 bis 2), Kalk bzw. Baukalk (EN 459) sowie Puzzolane bzw. latent hydraulische Bindemittel wie z. B. Flugasche, Metakaolin, Silicastaub, Hüttensand. Weiterhin enthalten die anorganischen Feststoffsuspensionen in der Regel Füllstoffe, insbesondere Gesteinskörnung bestehend aus z. B. Calciumcarbonat, Quarz oder anderen natürlichen Gesteinen verschiedener Korngröße und Kornform sowie weitere anorganische und/oder organische Additive (Zusatzmittel) zur gezielten Beeinflussung von Eigenschaften bauchemischer Produkte z. B. Hydratationskinetik, Rheologie oder Luftgehalt. Außerdem können organische Bindemittel wie z. B. Latexpulver enthalten sein.

Um Baustoffmischungen, insbesondere auf Basis von anorganischen Bindemitteln in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu einer signifikant verschlechterten mechanischen Festigkeit, Beständigkeit und Dauerhaftigkeit.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen in der Bauchemie als Wasserreduktions- oder Fließmittel bezeichnet werden. Als derartige Mittel sind vor allem Polykondensationsprodukte auf Basis von Naphthalin- oder Alkylnaphthalinsulfonsäuren bzw. Sulfonsäuregruppen enthaltende Melamin-Formaldehydharze bekannt.

DE 3530258 beschreibt die Verwendung von wasserlöslichen Natriumnaphthalinsulfonsäure-Formaldehydkondensaten als Zusatzmittel für anorganische Bindemittel und Baustoffe. Diese Zusatzmittel werden zur Verbesserung der Fließfähigkeit der Bindemittel wie z. B. Zement, Anhydrit oder Gips sowie den damit hergestellten Baustoffen beschrieben.

DE 2948698 beschreibt hydraulische Mörtel für Estriche, die Fließmittel auf Basis von Melamin-Formaldehyd-Kondensationsprodukten und/oder sulfonierte Formaldehyd-Naphthalinkondensate und/oder Ligninsulfonat und als Binder Portlandzement, tonhaltiger Kalkmergel, Ton- und Schwachbrandklinker enthalten.

Neben den rein anionischen Fließmitteln, die im wesentlichen Carbonsäure- und Sulfonsäuregruppen enthalten, werden als neuere Gruppe von Fließmitteln schwach anionische Kammpolymere beschrieben, die üblicherweise anionische Ladungen an der Hauptkette tragen und nichtionische Polyalkylenoxidseitenketten enthalten.

WO 01/96007 beschreibt diese schwach anionischen Fließ- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten.

DE 19513126 und DE 19834173 beschreiben Copolymere auf Basis von ungesättigten Dicarbonsäurederivaten und Oxyalkylenglykol-Alkenylethern und deren Verwendung als Zusatzmittel für hydraulische Bindemittel, insbesondere Zement.

Ziel der Zugabe von Fließmitteln in der Bauindustrie ist entweder die Plastizität des Bindemittelsystems zu erhöhen oder die benötigte Wassermenge bei gleichen Verarbeitungsbedingungen zu reduzieren.

Es hat sich gezeigt, dass Fließmittel auf Basis von Ligninsulfonat, Melaminsulfonat und Polynaphthalinsulfonat den schwach anionischen, polyalkylenoxidhaltigen Copolymeren in ihrer Wirksamkeit deutlich unterlegen sind. Diese Copolymere werden auch als Polycarboxylatether (PCE) bezeichnet. Polycarboxylatether dispergieren die anorganischen Partikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenoxid-Seitenketten, die durch Absorption von Wassermolekülen eine stabilisierende Schutzschicht um die Partikel bilden.

Dadurch kann entweder die benötige Menge Wasser für das Einstellen einer bestimmten Konsistenz gegenüber den klassischen Fließmitteln reduziert werden oder aber die Plastizität der feuchten Baustoffmischung wird durch die Zugabe der Polycarboxylatether so weit reduziert, dass selbstverdichtender Beton oder selbstverdichtender Mörtel bei niedrigen Wasser/Zement-Verhältnissen hergestellt werden kann. Auch ermöglicht die Verwendung der Polycarboxylatether die Herstellung von Transportbeton oder Transportmörtel, der über längere Zeiträume pumpbar bleibt oder die Herstellung von hochfesten Betonen oder hochfesten Mörteln durch die Einstellung eines niedrigen Wasser/Zement-Verhältnisses.

Dispergiermittel auf Basis von Polycarboxylatethern und deren Derivate werden entweder als Feststoff in Pulverform oder als wässrige Lösung angeboten. Pulverförmige Polycarboxylatether können beispielsweise einem Werktrockenmörtel oder Werktrockenbeton bei dessen Herstellung zugemischt werden. Beim Anmachen des Werktrockenmörtels mit Wasser lösen sich die Polycarboxylatether und können nachfolgend ihre Wirkung entfalten.
Insbesondere für die Herstellung von Trockenmörteln oder Werktrockenbetonen muss das Dispergiermittel als Feststoff in Pulverform vorliegen.

In vielen Fällen ist es jedoch schwierig Dispergiermittel in Pulverform herzustellen, da die Polymere bei der Herstellung nicht direkt in Pulverform erhalten werden können oder die erhaltenen Pulver nicht die gewünschten anwendungstechnischen Eigenschaften aufweisen.

Diesbezüglich sind aus der DE 199 05 488 pulverförmige Polymerzusammensetzungen auf Basis von Polyethercarboxylaten bekannt, wobei diese 5 bis 95 Gew.-% des wasserlöslichen Polymers und 5 bis 95 Gew.-% eines feinteiligen mineralischen Trägermaterials umfassen. Die Produkte werden durch in Kontakt bringen des mineralischen Trägermaterials mit einer Schmelze oder einer wässrigen Lösung des Polymers hergestellt. Als Vorteile dieses Produktes wird im Vergleich zu sprühgetrockneten Produkten eine deutlich erhöhte Verklebungs- und Verbackungsresistenz genannt.

Weiterhin ist bekannt den Polymeren bei der Trocknung weitere Hilfsstoffe zuzusetzen. So beschreibt die WO 0017263 die Herstellung von wasserlöslichen Polymerpulvern auf Basis von Polyethercarboxylaten durch Trocknung von wässrigen Polymerlösungen unter Zusatz von Stabilisatoren.

EP 1052232 beschreibt die Herstellung eines pulverförmigen Dispergiermittels, wobei der Flüssigkeit, die ein Polyethercarboxylate enthält, ein Reduktionsmittel zugesetzt wird und die ein Reduktionsmittel enthaltende Flüssigkeit anschließend getrocknet und pulverisiert wird.

Dies hat jedoch den Nachteil, dass der Wirkstoffgehalt der Pulver sinkt und somit höhere Transportkosten anfallen und dass die Hilfsstoffe häufig zu unerwünschten Eigenschaften in der Bindemittelzusammensetzung führen und hierbei beispielsweise die Erhärtungsreaktion verzögern.

Aufgabe der vorliegenden Erfindung war es demzufolge, Dispergiermittel zur Verfügung zu stellen, welche gute Eigenschaften bezüglich ihrer Dosierrobustheit und Fließmaßerhaltung besitzen und gleichzeitig leicht in Pulverform überführt werden können und gute anwendungstechnische Pulvereigenschaften aufweisen. Insbesondere sollte das Pulver hierbei eine gute Fliessfähigkeit, Temperaturrobustheit und geringe Verbackungsneigung sowie eine hohe Scherunempfindlichkeit aufweisen. Die Menge an Hilfsstoffen im Polymerpulver sollte hierbei so gering wie möglich sein und bevorzugt ganz vermieden werden.

Gelöst wurde diese Aufgabe durch ein Polymer erhältlich durch Copolymerisation von Monomeren, umfassend
(I) mindestens ein ethylenisch ungesättigtes Monomer, welches mindestens eine Säuregruppe umfasst und
(II) mindestens ein ethylenisch ungesättigtes Monomer mit Polyethergruppen der Struktureinheit (IIa),

   -(CₐH₂ₐO)ₙ- (IIa)

   wobei
   n für eine ganze Zahl von 5 bis 35,
   a unabhängig voneinander für jede (CₐH₂ₐO)-Einheit gleich oder verschieden für 2, 3 oder 4 steht und
(III) mindestens ein ethylenisch ungesättigtes Monomer mit Polyethergruppen der Struktureinheit (IIIa),

   -(C_{b}H_{2b}O)ₘ- (IIIa)

   wobei
   m für eine ganze Zahl von 45 bis 150,
   b unabhängig voneinander für jede (C_{b}H_{2b}O)-Einheit gleich oder verschieden für 2, 3 oder 4 steht und
   wobei das molare Verhältnis von Monomer (II) zu Monomer (III) zwischen 75 zu 25 und 99,5 zu 0,5 beträgt.

Überraschend hat sich hierbei herausgestellt, dass das erfindungsgemäße Polymer nicht nur die gestellte Aufgabe im vollen Umfang löst, sondern darüber hinaus auch noch in anorganischen Bindemittelzusammensetzungen, über einen weiten Dosierbereich des Polymers, zu sehr guten Segregationseigenschaften des Systems führt.

Es ist erfindungswesentlich, dass das polymerisierbare Monomer (I) eine Säuregruppe umfasst. Unter dem Begriff "Säuregruppe" wird in der vorliegenden Anmeldung sowohl die freie Säure als auch deren Salze verstanden. Bevorzugt kann es sich bei der Säure um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handeln. Besonders bevorzugt sind Carboxy- und Phosphonooxygruppen.

In einer bevorzugten Ausführungsform wird das ethylenisch ungesättigte Monomer (I) durch mindestens eine der folgenden allgemeinen Formeln aus der Gruppe (Ia), (Ib) und (Ic) repräsentiert:

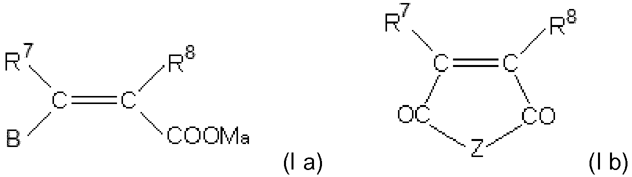

Bei dem Mono- oder Dicarbonsäure-Derivat (la) und dem in cyclischer Form vorliegenden Monomer (Ib), wobei Z = O (Säureanhydrid) oder NR¹⁶ (Säureimid) darstellen, steht R⁷ und R⁸ unabhängig voneinander für Wasserstoff oder einen aliphatischen Kohlenwasserstoffrest mit 1 bis 20 C-Atomen, vorzugsweise eine Methylgruppe. B bedeutet H, -COOMₐ, -CO-O(C_{q}H_{2q}O)ᵣ-R⁹, -CO-NH-(C_{q}H_{2q}O)ᵣ-R⁹.

M bedeutet Wasserstoff, ein ein- oder zweiwertiges Metallkation, vorzugsweise Natrium-, Kalium-, Calcium- oder Magnesium-Ion, weiterhin Ammonium oder ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₆₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R⁹ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2 , 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können. Weiterhin steht Z für O oder NR¹⁶, wobei R¹⁶ unabhängig voneinander gleich oder verschieden sowie repräsentiert wird durch einen verzweigten oder unverzweigten C₁- bis C₁₀-Alkylrest, C₅- bis C₈-Cycloalkylrest, Arylrest, Heteroarylrest oder H.

Die folgende Formel stellt das Monomer (Ic) dar:

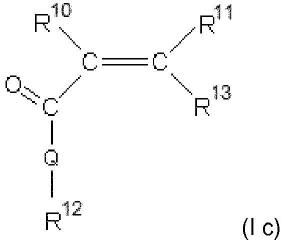

Hierbei steht R¹⁰ und R¹¹ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen. Q kann gleich oder verschieden sein und wird durch NH, NR¹⁵ oder O repräsentiert, wobei R¹⁵ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

Weiterhin ist R¹² gleich oder verschieden und wird durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR¹⁴_{b} mit n = 0, 1, 2, 3 oder 4 und b = 2 oder 3 repräsentiert.

R¹³ bedeutet H, -COOMₐ, -CO-O(C_{q}H_{2q}O)ᵣ-R⁹, -CO-NH-(C_{q}H_{2q}O)ᵣ-R⁹, wobei Mₐ, R⁹, q und r die oben genannten Bedeutungen besitzen.

R¹⁴ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

In einer bevorzugten Ausführungsform handelt es sich bei dem ethylenisch ungesättigten Monomer (I) um mindestens eine Verbindung aus der Reihe Acrylsäure, Methacrylsäure, Crotonsäure, Itaconsäure, Maleinsäure, Fumarsäure, Vinylsulfonsäure, Allylsulfonsäure, Sulfoethylmethacrylat, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure, 2-Acrylamido-2,4,4-trimethylpentansulfonsäure, Vinylphosphonsäure, Allylphosphonsäure, N-(Meth)acrylamidoalkylphosphonsäuren und (Meth)acryloyloxyalkylphosphonsäuren. Besonders bevorzugt handelt es sich bei dem ethylenisch ungesättigten Monomer (I) um mindestens eine Verbindung aus der Reihe Acrylsäure, Methacrylsäure und Maleinsäure, insbesondere Acrylsäure.

Insbesondere bevorzugt wird das erfindungsgemäße Monomer (II) durch die allgemeine Formel (IIb) repräsentiert 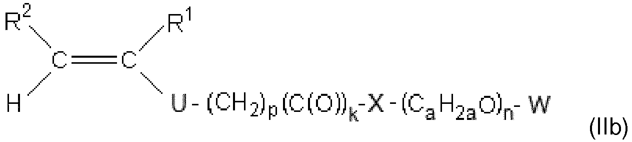 wobei
- U: für Sauerstoff oder eine chemische Bindung,
- p: für eine ganze Zahl zwischen 0 und 4
- X: Sauerstoff, Schwefel oder eine Gruppe NR³ bedeutet,
- k: 0 oder 1 ist,
- W: einen Wasserstoff-, einen C₁-C₆-Alkyl- oder einen Arylrest bedeutet oder die Gruppe Y-F bedeutet, wobei
- Y: für eine lineare oder verzweigte Alkylengruppe mit 2 bis 8 C-Atomen steht, die einen Phenylring tragen kann,
- F: für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe R⁴ aufweisen können, und wobei 1 oder 2 Kohlenstoffringglieder als Carbonylgruppe vorliegen können,
- R¹, R², R³ und R⁴: unabhängig voneinander für Wasserstoff oder einen aliphatischen Kohlenwasserstoffrest mit 1 bis 4 C-Atomen oder Benzyl steht und n und a die für Struktureinheit (IIa) genannten Bedeutungen besitzen, handelt.

Insbesondere bevorzugt wird das erfindungsgemäße Monomer (III) durch die allgemeine Formel (IIIb) repräsentiert 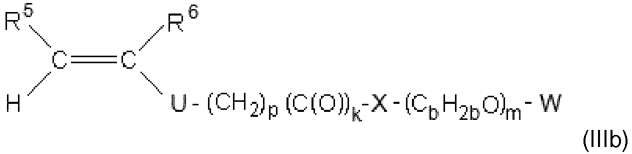 wobei
- U: für Sauerstoff oder eine chemische Bindung,
- p: für eine ganze Zahl zwischen 0 und 4
- X: Sauerstoff, Schwefel oder eine Gruppe NR³ bedeutet,
- k: 0 oder 1 ist,
- W: einen Wasserstoff-, einen C₁-C₆-Alkyl- oder einen Arylrest bedeutet oder die Gruppe Y-F bedeutet, wobei
- Y: für eine lineare oder verzweigte Alkylengruppe mit 2 bis 8 C-Atomen steht, die einen Phenylring tragen kann,
- F: für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe R⁴ aufweisen können, und wobei 1 oder 2 Kohlenstoffringglieder als Carbonylgruppe vorliegen können,
- R³, R⁴, R⁵ und R⁶: unabhängig voneinander für Wasserstoff oder einen aliphatischen Kohlenwasserstoffrest mit 1 bis 4 C-Atomen oder Benzyl steht und
- m und b: die für Struktureinheit (IIIa) genannten Bedeutungen besitzen, handelt.

Unabhängig voneinander ist es hinsichtlich der Formeln (IIb) und (IIIb) jeweils bevorzugt, dass U Sauerstoff bedeutet, p für 4 steht, X Sauerstoff bedeutet, k gleich 0 ist und R¹, R², R⁵ und R⁶ unabhängig voneinander für Wasserstoff oder eine Methylgruppe steht.

Hinsichtlich des erfindungsgemäßen Polymers ist es insbesondere bevorzugt, wenn n für eine ganze Zahl von 20 bis 30 und a unabhängig voneinander für jede (CₐH₂ₐO)-Einheit gleich oder verschieden für 2 oder 3 steht. Ganz besonders bevorzugt steht n für eine ganze Zahl von 20 bis 30 und a ist für jede (CₐH₂ₐO)-Einheit gleich 2.

Weiterhin ist es hinsichtlich des erfindungsgemäßen Polymers insbesondere bevorzugt, wenn m für eine ganze Zahl von 65 bis 75 und b unabhängig voneinander für jede (C_{b}H_{2b}O)-Einheit gleich oder verschieden für 2 oder 3 steht. Ganz besonders bevorzugt steht n für eine ganze Zahl von 65 bis 75 und a ist für jede (CₐH₂ₐO)-Einheit gleich 2.

Allgemein kann gesagt werden, dass die (CₐH₂ₐO)-Einheit und die (C_{b}H_{2b}O)-Einheit besonders bevorzugt reine Poly-Ethoxyseitenketten sind, wobei jedoch weiterhin bevorzugt auch gemischte Poly-Alkoxyseitenketten, insbesondere solche, die sowohl Propoxy- als auch Ethoxy-Gruppen enthalten, vorliegen können.

In der Praxis wird häufig als Polyethermakromonomer alkoxyliertes Isoprenol, also alkoxyliertes 3-Methyl-3-buten-1-ol und/oder alkoxylierter Hydroxybutylvinylether und/oder alkoxylierter (Meth)allylalkohol, wobei Methallylalkohol bevorzugt gegenüber Allylalkohol ist eingesetzt. Besonders bevorzugt ist alkoxylierter Hydroxybutylvinylether.

Das erfindungsgemäße Polymere umfasst mindestens drei Monomerbausteine. Neben dem Monomeren (I), (II) und (III) können noch weitere Monomertypen in dem erfindungsgemäßen Copolymer zum Einsatz kommen. Beispiele geeigneter weiterer Monomere umfassen Acrylamid und Methacrylamid, bevorzugt Acrylamid sowie Derivate davon, wie beispielsweise N-Methyl(meth)acrylamid, N, N'-Dimethyl(meth)acrylamid sowie N-Methylolacrylamid. Weiterhin zu nennen sind N-Vinylderivate wie N-Vinylformamid, N-Vinylacetamid, N-Vinylpyrrolidon oder N-Vinylcaprolactam. Auch zu nennen sind OH-Gruppen aufweisende Monomere wie Hydroxyethyl(meth)acrylat, Hydroxypropyl(meth)acrylat, (Meth)Allylalkohol, Hydroxyvinylethylether, Hydroxyvinylpropylether, 3-Methyl-3-buten-1-ol oder Hydroxyvinylbutylether. Bevorzugt handelt es sich bei dem ggf. vorhandenen weiteren Monomeren im erfindungsgemäßen Polymer um OH-Gruppen aufweisende Monomere beziehungsweise Derivate davon, besonders bevorzugt um Hydroxyvinylbutylether sowie 3-Methyl-3-buten-1-ol.

In einer bevorzugten Ausführungsform beträgt die Gesamtsumme der Monomere (I), (II) und (III) im erfindungsgemäßen Polymer 100 Gew.-%. Es kann aber auch vorteilhaft sein, Polymere mit vier oder mehr Monomerbausteinen zu verwenden. In einer weiterhin bevorzugten Ausführungsform umfasst das erfindungsgemäße Polymer somit neben den Monomerbausteinen (I), (II) und (III) weiterhin von 1 bis 40 Gew.-%, bevorzugt 5 bis 30 Gew.-%, insbesondere bevorzugt 10 bis 20 Gew.-%, mindestens eines weiteren Monomerbausteins.

Der molare Anteil der Monomere (I), (II) und (III) kann in dem erfindungsgemäßen Copolymer in weiten Bereichen frei gewählt werden. Als besonders vorteilhaft hat es sich erwiesen, wenn der Anteil des Monomeren (I) an dem Copolymer 50 bis 90 Mol-%, bevorzugt 60 bis 80 Mol-% und insbesondere 65 bis 78 Mol-% beträgt. Weiterhin beträgt der Anteil des Monomeren (II) und der Anteil des Monomeren (III) an dem erfindungsgemäßen Polymer zusammen bevorzugt 10 bis 50 Mol-%, insbesondere 15 bis 45 Mol-% und besonders bevorzugt 20 bis 35 Mol-%.

Es ist erfindungswesentlich, dass das molare Verhältnis von Monomer (II) zu Monomer (III) zwischen 75 zu 25 und 99,5 zu 0,5 beträgt. Bevorzugt beträgt das molare Verhältnis von Monomer (II) zu Monomer (III) zwischen 80 zu 20 und 99 zu 1. Insbesondere bevorzugt beträgt das molare Verhältnis von Monomer (II) zu Monomer (III) zwischen 85 zu 15 und 98 zu 2 und ganz besonders bevorzugt zwischen 90 zu 10 und 97,0 zu 3.

In einer weiterhin bevorzugten Ausführungsform besitzt das erfindungsgemäße Polymer ein Molekulargewicht von 15000 g/mol bis 40000 g/mol, bevorzugt 20000 bis 35000 g/mol, bestimmt durch Gelpermeationschromatographie gegen Polyethylenglykol Standards.

Insbesondere liegt das erfindungsgemäße Polymer pulverförmig vor. Das pulverförmige Polymer sollte im Rahmen der vorliegenden Erfindung vorzugsweise trocken sein, wobei hierunter zu verstehen ist, dass dieses einen Wassergehalt nach Karl-Fischer von weniger als 5 Gew.-%, vorzugsweise weniger als 1 Gew.-% und besonders bevorzugt von weniger als 0,1 Gew.-% aufweist.

Es ist bevorzugt, wenn das erfindungsgemäße pulverförmige Polymer eine mittlere Teilchengröße zwischen 0,1 und 1000 µm, besonders bevorzugt zwischen 1 und 200 µm aufweist. Die Teilchengröße wird hierbei durch Laserdiffraktometrie bestimmt.

Die vorliegende Erfindung sieht die Verwendung des erfindungsgemäßen Polymers als Zusatzmittel für anorganische Bindemittelzusammensetzungen vor. Insbesondere kann das erfindungsgemäße Polymer als Dispergiermittel in anorganische Bindemittelzusammensetzungen verwendet werden.

Ein weiterer Gegenstand der vorliegenden Erfindung ist ein Verfahren zur Herstellung der erfindungsgemäßen Polymere. Die erfindungsgemäßen Copolymere können nach dem Fachmann prinzipiell bekannten Methoden durch radikalische Polymerisation der Monomere (I), (II) und (III) und ggf. weiterer Monomere hergestellt werden, beispielsweise durch Substanz-, Lösungs-, Gel-, Emulsions-, Dispersions- oder Suspensionspolymerisation, bevorzugt in wässriger Phase.

Die vorliegende Erfindung betrifft somit auch ein Verfahren zur Herstellung eines oben beschriebenen erfindungsgemäßen Polymers, wobei die Monomere (I), (II) und (III) einer wässrigen Lösungspolymerisation unterzogen werden. Als Lösungsmittel bei der Herstellung der erfindungsgemäßen Copolymere ist insbesondere Wasser geeignet. Es besteht aber auch die Möglichkeit ein Gemisch aus Wasser und einem organischen Lösungsmittel einzusetzen, wobei sich das Lösungsmittel bezüglich radikalischer Polymerisationsreaktionen weitestgehend inert verhalten sollte. Insbesondere kann es sich bei dem organischen Lösungsmittel um mindestens ein Lösungsmittel aus der Reihe Ethylacetat, n-Butylacetat, 1-Methoxy-2-propylacetat, Ethanol, i-Propanol, n-Butanol, 2-Ethylhexanol, 1-Methoxy-2-propanol, Ethylenglykol, Propylenglykol, Aceton, Butanon, Pentanon, Hexanon, Methylethylketon, Ethylacetat, Butylacetat, Amylacetat, Tetrahydrofuran, Diethylether, Toluol, Xylol oder höher siedende Alkylbenzole handeln. Weiterhin kann es sich um Polyethylenglykolether oder Polypropylenglykolether oder statistische Ethylenoxid/Propylenoxid-Copolymere mit einer mittleren Molmasse von 200 bis 2000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- und/oder Propylenglykoleinheiten, beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 150 bis 20000 g/mol, Pentaerythritolalkoxylate, Ethylencarbonat, Propylencarbonat, Glycerincarbonat, Glycerinformal und 2,3-O-Isopropylidenglycerin handeln. Insbesondere bevorzugt handelt es sich um Alkylpolyalkylenglykolether und besonders bevorzugt Methylpolyethylenglykolether sowie Polyethylenglykolether, Polypropylenglykolether und statistische Ethylenoxid/Propylenoxid-Copolymere mit einer mittleren Molmasse von 150 bis 2000 g/mol. Weiterhin bevorzugt sind Lösungsmittel auf Basis von Carbonaten, insbesondere Ethylencarbonat, Propylencarbonat und Glycerincarbonat.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder chemische Polymerisationsinitiatoren wie organische Peroxide, z. B. Benzoylperoxid, tert.-Butylhydroperoxid, Methylethylketonperoxid, Cumoylperoxid, Dilauroylperoxid oder Azoinitiatoren, wie z. B. Azodiisobutyronitril, Azobisamidopropyl-hydrochlorid und 2,2'-Azobis(2-methylbutyronitril) verwendet werden. Ebenfalls geeignet sind anorganische Peroxyverbindungen, wie z. B. Ammoniumperoxodisulfat, Kaliumperoxodisulfat oder Wasserstoffperoxid, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten. Insbesondere bevorzugt handelt es sich um eine Mischung aus mindestens einer Sulfinsäure mit mindestens einem Eisen(III)-Salz und/oder um eine Mischung aus Ascorbinsäure mit mindestens einem Eisen(III)-Salz.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat, 2-Mercaptoethanol, 2-Mercaptopropionsäure, 3-Mercaptopropionsäure und einige Halogenverbindungen, wie z. B. Tetrachlorkohlenstoff, Chloroform und Methylenchlorid.

Ein weiterer Gegenstand der vorliegenden Erfindung ist eine pulverförmige Zusammensetzung umfassend, bezogen auf die Gesamtmasse der Zusammensetzung
A) mindestens 20 Gew.-% eines anorganischen Bindemittels und
B) 0,01 bis 4 Gew.-% mindestens eines erfindungsgemäßen Polymers.

Bevorzugt handelt es sich bei dem anorganischen Bindemittel um mindestens eines aus der Reihe Zement auf Basis Portlandzement, Weißzement, Calciumaluminatzement, Calciumsulfoaluminatzement, Calciumsulfat-n-Hydrat und latent hydraulisches bzw. puzzolanisches Bindemittel.

Bei der erfindungsgemäßen pulverförmige Zusammensetzung, handelt es sich bevorzugt um einen Trockenmörtel. Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werkmörtel, insbesondere als Werktrockenmörtel bezeichnet. Derartige Mörtelsysteme können die verschiedensten bauphysikalischen Aufgaben erfüllen. Je nach gestellter Aufgabe werden dem Bindemittel, welches bspw. Zement und/oder Kalk und/oder Calciumsulfat enthalten kann, weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Dispergiermittel, Verdicker, Entschäumer, Luftporenbildner, Korrosionsinhibitoren handeln.

Bei dem erfindungsgemäßen Werktrockenmörtel kann es sich insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel (z. B. für Trinkwasserrohre) oder Selbstverlaufsmassen handeln.

Ein weiterer Gegenstand der vorliegenden Erfindung ist ein Verfahren zur Herstellung einer erfindungsgemäßen Bindemittelzusammensetzung, wobei das erfindungsgemäße pulverförmige Polymer mit einem anorganischen Bindemittel und optional weiteren Additiven gemischt wird.

Bei der erfindungsgemäßen pulverförmigen Zusammensetzung, welche mindestens ein anorganisches Bindemittel aufweist, kann es sich bei dem Bindemittel insbesondere auch um ein Bindemittelgemisch handeln. Darunter werden im vorliegenden Zusammenhang Gemische aus mindestens zwei Bindemitteln aus der Reihe Zement, puzzolanisches und/oder latent hydraulisches Bindemittel, Weißzement, Spezialzement, Calciumaluminatzement, Calciumsulfoaluminatzement und die verschiedenen wasserhaltigen und wasserfreien Calciumsulfate verstanden. Diese können dann ggf. noch weitere Additive enthalten.

In einer besonders bevorzugten Ausführungsform umfasst die erfindungsgemäße pulverförmige Zusammensetzung mindestens einen Füllstoff aus der Reihe Quarzsand, Quarzmehl, Kalkstein, Schwerspat, Calcit, Aragonit, Vaterit, Dolomit, Talkum, Kaolin, Glimmer, Kreide, Titandioxid, Rutil, Anatas, Aluminiumhydroxid, Aluminiumoxid, Magnesiumhydroxid und Brucit. Insbesondere kann die erfindungsgemäße pulverförmige Zusammensetzung zu mindestens 50 Gew.-%, insbesondere zu mindestens 60 Gew.-% und besonders bevorzugt zu mindestens 75 Gew.-% aus mindestens einer Verbindung aus der Reihe Quarzsand, Quarzmehl, Kalkstein, Schwerspat, Calcit, Aragonit, Vaterit, Dolomit, Talkum, Kaolin, Glimmer, Kreide, Titandioxid, Rutil, Anatas, Aluminiumhydroxid, Aluminiumoxid, Magnesiumhydroxid und Brucit bestehen.

Bei dem anorganischen Bindemittel kann es sich insbesondere um Gips handeln. Der Ausdruck "Gips" wird im vorliegenden Zusammenhang synonym mit Calciumsulfat verwendet, wobei das Calciumsulfat in seinen unterschiedlichen wasserfreien und hydratisierten Formen mit und ohne Kristallwasser vorliegen kann. Natürlicher Gips umfasst im Wesentlichen Calciumsulfat-Dihydrat ("Dihydrat"). Die natürliche kristallwasserfreie Form von Calciumsulfat ist vom Ausdruck "Anhydrit" umfasst. Neben den natürlichen Erscheinungsformen stellt Calciumsulfat ein typisches Nebenprodukt technischer Prozesse dar, worunter dann "synthetischer Gips" verstanden wird. Ein typisches Beispiel für einen synthetischen Gips aus technischen Prozessen ist die Abgasentschwefelung. Synthetischer Gips kann aber auch gleichermaßen das Nebenprodukt von Phosphorsäure- oder Flusssäure-Herstellungsverfahren entstehen. Typischer Gips (CaSO₄ x 2H₂O) kann calziniert werden, indem das Kristallwasser abgetrennt wird. Produkte der unterschiedlichsten Calzinierungsverfahren sind α- oder β-Halbhydrat. β-Halbhydrat resultiert aus einer raschen Erhitzung in offenen Gefäßen, bei einer gleichzeitig schnellen Verdampfung von Wasser unter Bildung von Hohlräumen. α-Halbhydrat wird hergestellt durch die Entwässerung von Gips in geschlossen Autoklaven. Die Kristallform in diesem Fall ist relativ dicht, weshalb dieses Bindemittel weniger Wasser zur Verflüssigung benötigt als β-Halbhydrat. Auf der anderen Seite rehydriert Halbhydrat mit Wasser zu Dihydrat-Kristallen. Üblicherweise ist für die Hydratation von Gips ein Zeitbedarf von einigen Minuten bis Stunden notwendig, woraus eine verkürzte Verarbeitungszeit im Vergleich zu Zementen resultiert, die zur vollständigen Hydratation mehrere Stunden bis Tage benötigen. Diese Eigenschaften machen Gips zu einer brauchbaren Alternative zu Zementen als Bindemittel in den verschiedensten Anwendungsgebieten. Außerdem zeigen ausgehärtete Gipsprodukte eine ausgeprägte Härte und Druckfestigkeit. In einer besonders bevorzugten Ausführungsform handelt es sich bei der erfindungsgemäßen pulverförmigen Zusammensetzung um einen Calciumsulfat-Fließestrich.

Ein weiterer Gegenstand der vorliegenden Erfindung ist eine pulverförmige Zusammensetzung umfassend das erfindungsgemäße Polymer und mindestens ein organisches und/oder anorganisches Pigment, welches insbesondere für die Herstellung von Lacken, Farben und Kunstoffen sowie Druckertinten geeignet ist. Bevorzugt handelt es sich bei der erfindungsgemäßen pulverförmigen Zusammensetzung um eine anorganisches Pigmentzusammensetzung. Die Zusammensetzung kann hierbei bevorzugt mindestens eine Verbindung aus der Reihe Titandioxide, Zinksulfide, Zinkoxide, Eisenoxide, Magnetite, Manganeisenoxide, Chromoxide, Ultramarin, Nickelantimontitanoxide, Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente umfassen. Insbesondere kann die pulverförmige Zusammensetzung die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 umfassen. Bevorzugt sind auch Mischungen anorganischer Pigmente. Mischungen von organischen mit anorganischen Pigmenten können ebenfalls eingesetzt werden. Die hierauf basierenden erfindungsgemäßen Zusammensetzungen eignen sich zur Herstellung von Pigmentdipsersionen, welche als Abtönpasten, Pigmentslurries, -dispersionen oder -präparationen in der Farben und Lackindustrie, in der Keramikindustrie und u. a. in der Textil- und Lederindustrie einsetzt werden können.

Insbesondere lassen sich auch erfindungsgemäße Zusammensetzungen auf Basis von transparenten Eisenoxidpigmenten herstellen, mit denen transparente wässrige oder lösemittelhaltige Lacke für die Holzbeschichtung erzeugt werden können.
In einer besonderen Ausführungsform wird die erfindungsgemäße pulverförmige Zusammensetzung in wässrigen Dispersionsfarben eingesetzt. Die erfindungsgemäße pulverförmige Zusammensetzung basiert in diesem Fall bevorzugt auf einem Pulver auf Basis von Weißpigment, insbesondere Titandioxid, Bariumsulfat und Zinksulfit und/oder Buntpigment, insbesondere Eisenoxidpigmente, Chromdioxid und Cobaltspinellpigmente und/oder natürlichen oder gefällten Calciumcarbonat, Talkum, Kaolin, Quarzmehl und andere Mineralpigmenten. Insbesondere kann das erfindungsgemäße Pulver zu mindestens 50 Gew.-%, insbesondere zu mindestens 90 Gew.-% und besonders bevorzugt zu mindestens 98 Gew.-% aus mindestens einem organischen und/oder anorganischen Pigment bestehen. Bevorzugt wird das erfindungsgemäße Polymer in einer Menge von 0,01 bis 6 Gew.-%, besonders bevorzugt 0,1 bis 2 Gew.-% eingesetzt, wobei sich die Menge auf die gesamte erfindungsgemäße pulverförmige Zusammensetzung, umfassend das mindestens eine organisches und/oder anorganisches Pigment, bezieht.

Die nachfolgenden Beispiele sollen die Erfindung näher erläutern.

### Beispiele

### Synthese der Dispergiermittel

Im einem 1 Liter Vierhalskolben mit Thermometer, Rückflusskühler und einem Anschluss für zwei Zuläufe wurden 540 g Wasser und insgesamt 370 g Vinyloxybutylpolyethylenglykol mit 22 EO Einheiten und/oder Vinyloxybutylpolyethylenglykol mit 65 EO Einheiten entsprechend Tabelle 1 vorgelegt. 0,01 g Eisen(II)Sulfat, 1,4 g Mercaptoethanol, sowie 8 g Brüggolit FF6 der Brüggemann GmbH (Mischung aus Natriumsulfit, dem Dinatriumsalz der 2-Hydroxy-2-sulfinatoessigsäure und dem Dinatriumsalz der 2-Hydroxy-2-sulfonatoessigsäure) wurden gelöst. Die Lösung wurde auf 13°C gekühlt. Die Menge Acrylsäure entsprechend Tabelle 1 wurde zugegeben. Anschließend wurden sofort 4 g 50%-ige Wasserstoffperoxidlösung schnell zugegeben. Nach Beendigung der exothermen Reaktion wurde 5 min nachgerührt und mit NaOH auf pH 7 neutralisiert.

**Tabelle 1**

| Versuch | VOBPEG 3000 (Molanteile) | VOBPEG 1100 (Molanteile) | Acrylsäure (Molanteile) | Ladungsdichte [meq/g] |
|---|---|---|---|---|
| 1 | 0,1 | 0,9 | 3 | 0,4 |
| 2 | 0,2 | 0,8 | 3 | 0,46 |
| 3 | 0,1 | 0,9 | 3,5 | 0,34 |
| 4 | 0,2 | 0,8 | 4 | 0,35 |
| 5 | 0,05 | 0,95 | 3 | 0,36 |
| 6 | 0,15 | 0,85 | 3,5 | 0,37 |
| 7 (Vergleich) | 0 | 1 | 3 | 0,33 |
| 8 (Vergleich) | 1 | 0 | 9 | 0,33 |
| 9 (Vergleich) | 0,4 | 0,6 | 5 | 0,36 |
| 10 (Vergleich) | 0,3 | 0,7 | 5 | 0,32 |
| 11 (Vergleich) | 0,4 | 0,6 | 3 | 0,6 |
| 12 (Vergleich) | 0,3 | 0,7 | 3 | 0,53 |

| | | | | |
|---|---|---|---|---|
| VOBPEG 3000: Vinyloxybutylpolyethylenglykol mit 65 EO Einheiten VOBPEG 1000: Vinyloxybutylpolyethylenglykol mit 22 EO Einheiten | | | | |

### Pulverqualität

Die Pulverqualität wurde mittels DSC (dynamische Differenzkalorimetrie) bestimmt (Heiz-/Kühlrate 5 K/min). Als Pulverqualitäts- und Stabilitätsbestimmender Faktor wird der Schmelzpunkt gewählt. Als qualitative Beurteilung wurde ein Reibschalentest angewendet. Hier wurde das Pulver in einer Reibschale auf 40°C erwärmt und anschließend mit dem Stößel 30 Sekunden lang bei gleichem Druck gerieben. Behielt das Material seine Pulverform, wurde die Pulverstabilität mit "++" bewertet, veränderte es das Aussehen nur leicht, wurde es mit "+" bewertet. Bildeten sich größere Agglomerate, wurde mit "-" bewertet. Die Ergebnisse sind in Tabelle 2 dargestellt.

**Tabelle 2**

| Dispergiermittel | Schmelzpunkt [°C] | Wertung |
|---|---|---|
| 1 | 35 | + |
| 2 | 40 | ++ |
| 3 | 42 | ++ |
| 4 | 41 | ++ |
| 5 | 30 | + |
| 6 | 45 | ++ |
| 7 (Vergleich) | 20 | - |
| 8 (Vergleich) | 56 | ++ |
| 9 (Vergleich) | 52 | ++ |
| 10 (Vergleich) | 50 | ++ |

### Anwendungstests

Die Polymere wurden als Dispergiermittel in Zement und CaSO₄-Anhydrid getestet.

### Calciumsulfat-Anhydrid:

394 g Synthetischer Anhydrid
600 g Normensand
140 g Wasser
3,94 g K₂SO₄
Dispergiermittel aus Versuchen 1 bis 12
Mischprozedur nach EN 196 Teil I mit Hägermann-Ring

**Tabelle 3**

| Dispergiermittel | Dosierung | Fließmaß [cm] | | | | | Erstarrung [h] | |
|---|---|---|---|---|---|---|---|---|
| | | 0 min | 5 min | 30 min | 60 min | 90 min | EB | EE |
| 1 | 0,09 | 27 | 26 | 23,5 | 23 | 22,5 | 8,5 | 10,4 |
| 2 | 0,08 | 26,5 | 25,5 | 23,5 | 22,5 | 22 | 7,9 | 9,7 |
| 3 | 0,09 | 27 | 26 | 23,5 | 23 | 22,5 | 7,7 | 10,4 |
| 4 | 0,08 | 26,5 | 25,5 | 23,5 | 22,5 | 22 | 8,0 | 10,5 |
| 5 | 0,09 | 27 | 26 | 24 | 24 | 23,5 | 8,5 | 10,4 |
| 6 | 0,08 | 27 | 25 | 23 | 22,5 | 22,5 | 8,9 | 10,1 |
| 7 | 0,09 | 27 | 26 | 23,5 | 23 | 22,5 | 15,3 | 20,1 |
| 8 | 0,07 | 27 | 23,5 | 22 | 19,5 | 18 | 7,6 | 9,5 |
| 9 | 0,07 | 28 | 26 | 24 | 23 | 22 | 8,0 | 9,9 |
| 10 | 0,08 | 27 | 26 | 24 | 23 | 22 | 7,9 | 10,0 |
| 11 | 0,12 | 28 | 23 | 22,5 | 22 | 21,5 | 8,1 | 10,0 |
| 12 | 0,12 | 27 | 26,5 | 24,5 | 23 | 22 | 7,3 | 9,6 |

Die Dosierung bezieht sich auf den synthetischen Anhydrid und ist in Gew.-% angegeben
EB: Erstarrungsbeginn
EE: Erstarrungsende
Die Erstarrungszeiten wurden analog DIN-EN 480-2 bestimmt.

### Segregationsneigung in Anhydrit-Mörtel

Die Robustheit spiegelt sich auch in der Stabilität gegenüber Bluten wieder. Dabei wurde ein 450 mm hoher und 50 mm breiter zylindrischer Konus verwendet.

Als Mörtel wurde folgendes Rezept eingesetzt:
394 g Synthetischer Anhydrid
600 g Normensand
140 g Wasser
4 g Kaliumsulfat

Dispergiermittel aus Versuchen 5 bis 12 analog der Dosierung aus Tabelle 3

Die Mischung wurde nach Wasserzugabe 30 sec gerührt. 450 ml dieses Mörtels wurde in den Konus gefüllt nach 10 min wurde das Blutwasser abgezogen und das Volumen bestimmt.

**Tabelle 4**

| Dispergiermittel | Blutwasser [ml] |
|---|---|
| 5 | 3 |
| 6 | 6,1 |
| 7 | 2 |
| 8 | 25 |
| 9 | 26 |
| 10 | 25 |
| 11 | 24 |
| 12 | 56 |

**Eine weitere Messreihe wurde mit folgender Mischung durchgeführt:**
900 g Synthese Anhydrid
1350 g Normensand
9 g Kaliumsulfat
Das Verhältnis Wasser/Bindemittel lag bei w/b = 0,35

**Tabelle 5**

| Dispergiermittel | Dosierung | Fließmaß [cm] | | | | | Erstarrung [h:min] | | Bluten nach 30 min [g] |
|---|---|---|---|---|---|---|---|---|---|
| | | 0 min | 5 min | 30 min | 60 min | 90 min | EB | EE | |
| 7 | 0,07 | 28 | 25,5 | 25,4 | 23 | 22,3 | 15:04 | 22:22 | 0 |
| 9 | 0,07 | 28,4 | 26,1 | 24,8 | 23,6 | 22,6 | 16:20 | 20:00 | 0,06 |
| 3 | 0,08 | 28,5 | 26,7 | 25,5 | 24,2 | 23,5 | 13:06 | 19:20 | 0,03 |

Die Dosierung bezieht sich auf den Synthese Anhydrid und ist in Gew.-% angegeben.
EB: Erstarrungsbeginn
EE: Erstarrungsende

Die Menge an Blutwasser wurde in einem 210 ml Messzylinder mit einem Durchmesser von 4 cm und einer Füllhöhe von 18 cm bestimmt

### Austestung verschiedener Fließmittel im Zementmörtel:

Zement/Quartzsand 1/1
w/z = 0,35.
Dispergiermittel aus Versuchen 1 bis 7

Das Fließmaß wurde auf ein Anfangsfließmaß im Hägermann-Ring ohne klopfen auf 13 +/- 0,5 cm eingestellt. Der Marsh-Trichter gibt die Durchflusszeit der Mörtelmischung bei vergleichbarem Fließmaß an (ASTM C939 - 10).

**Tabelle 6**

| Dispergiermittel | Dosierung | Fließmaß [cm] | | | | Durchflusszeit |
|---|---|---|---|---|---|---|
| | | 0 min | 5 min | 30 min | 60 min | [s] |
| 1 | 0,20 | 13,3 | 10,4 | 8,5 | 7,3 | 90 |
| 3 | 0,220 | 13,8 | 10,5 | 7,9 | 6,9 | 90 |
| 7 | 0,225 | 13,1 | 10,3 | 8,0 | 7,6 | 104 |
| 8 | 0,20 | 13,8 | 13,9 | 14,9 | 16,0 | 155 |

Die Dosierung bezieht sich auf den Zement und ist in Gew.-% angegeben

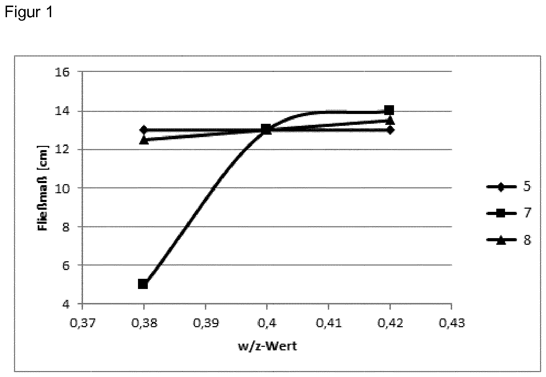

Zur Evaluierung der Dosierrobustheit wurden bei gleicher Dosierung unterschiedliche w/z-Werte (0,38; 0,40; 0,42) eingestellt (Figur 1).

Nur die erfindungsgemäßen Dispergiermittel zeigten eine gute Pulverqualität bei gleichzeitig guten anwendungstechnischen Eigenschaften.

## Patentansprüche

1. Polymer erhältlich durch Copolymerisation von Monomeren, umfassend
(I) mindestens ein ethylenisch ungesättigtes Monomer, welches mindestens eine Säuregruppe umfasst
und
(II) mindestens ein ethylenisch ungesättigtes Monomer mit Polyethergruppen der Struktureinheit (IIa),
-(CₐH₂ₐO)ₙ- (IIa)
wobei
n für eine ganze Zahl von 5 bis 35,
a unabhängig voneinander für jede (CₐH₂ₐO)-Einheit gleich oder verschieden für 2, 3 oder 4 steht und
(III) mindestens ein ethylenisch ungesättigtes Monomer mit Polyethergruppen der Struktureinheit (IIIa),
-(C_{b}H_{2b}O)ₘ- (IIIa)
wobei
m für eine ganze Zahl von 45 bis 150,
b unabhängig voneinander für jede (C_{b}H_{2b}O)-Einheit gleich oder verschieden für 2, 3 oder 4 steht und
wobei das molare Verhältnis von Monomer (II) zu Monomer (III) zwischen 75 zu 25 und 99,5 zu 0,5 beträgt.

2. Polymer nach Anspruch 1, **dadurch gekennzeichnet, dass** es sich bei der Säuregruppe des Monomers (I) um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handelt.

3. Polymer nach Anspruch 1 oder 2, **dadurch gekennzeichnet, dass** Monomer (II) durch die allgemeine Formel (IIb) repräsentiert wird 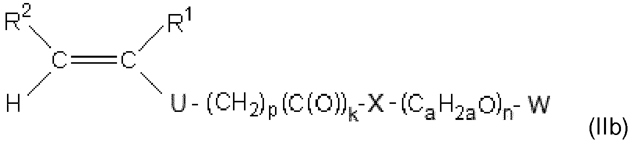 wobei
U für Sauerstoff oder eine chemische Bindung,
p für eine ganze Zahl zwischen 0 und 4,
X Sauerstoff, Schwefel oder eine Gruppe NR³ bedeutet,
k 0 oder 1 ist,
W einen Wasserstoff-, einen C₁-C₆-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe R⁴ aufweisen können, und wobei 1 oder 2 Kohlenstoffringglieder als Carbonylgruppe vorliegen können,
R¹, R², R³ und R⁴ unabhängig voneinander für Wasserstoff oder einen aliphatischen Kohlenwasserstoffrest mit 1 bis 4 C-Atomen oder Benzyl steht und
n und a die für Struktureinheit (IIa) genannten Bedeutungen besitzen, handelt.

4. Polymer nach einem der Ansprüche 1 bis 3, **dadurch gekennzeichnet, dass** Monomer (III) durch die allgemeine Formel (IIIb) repräsentiert wird 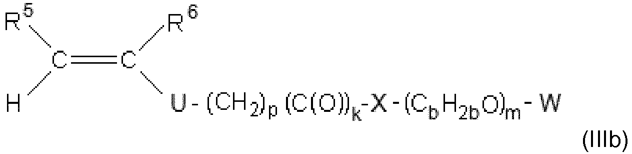 wobei
U für Sauerstoff oder eine chemische Bindung,
p für eine ganze Zahl zwischen 0 und 4,
X Sauerstoff, Schwefel oder eine Gruppe NR³ bedeutet,
k 0 oder 1 ist,
W einen Wasserstoff-, einen C₁-C₆-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe R⁴ aufweisen können, und wobei 1 oder 2 Kohlenstoffringglieder als Carbonylgruppe vorliegen können,
R³, R⁴, R⁵ und R⁶ unabhängig voneinander für Wasserstoff oder einen aliphatischen Kohlenwasserstoffrest mit 1 bis 4 C-Atomen oder Benzyl steht und
m und b die für Struktureinheit (IIIa) genannten Bedeutungen besitzen, handelt.

5. Polymer nach einem der Ansprüche 3 oder 4, **dadurch gekennzeichnet, dass**
U Sauerstoff bedeutet,
p für 4 steht,
X Sauerstoff bedeutet,
k 0 ist und
R¹, R², R⁵ und R⁶ unabhängig voneinander für Wasserstoff oder eine Methylgruppe steht.

6. Polymer nach einem der Ansprüche 1 bis 5, **dadurch gekennzeichnet, dass**
n für eine ganze Zahl von 20 bis 30,
a unabhängig voneinander für jede (CₐH₂ₐO)-Einheit gleich oder verschieden für 2 oder 3 steht.

7. Polymer nach einem der Ansprüche 1 bis 6, **dadurch gekennzeichnet, dass**
m für eine ganze Zahl von 65 bis 75,
b unabhängig voneinander für jede (C_{b}H_{2b}O)-Einheit gleich oder verschieden für 2 oder 3 steht.

8. Polymer nach einem der Ansprüche 1 bis 7, **dadurch gekennzeichnet, dass** das ethylenisch ungesättigte Monomer (I) durch mindestens eine der folgenden allgemeinen Formeln aus der Gruppe (Ia), (Ib) und (Ic) repräsentiert wird 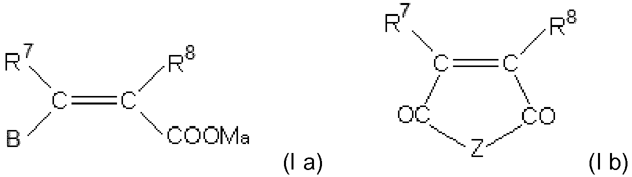 wobei
R⁷ und R⁸ unabhängig voneinander für Wasserstoff oder einen aliphatischen Kohlenwasserstoffrest mit 1 bis 20 C-Atomen
B für H, -COOMₐ, -CO-O(C_{q}H_{2q}O)ᵣ-R⁹, -CO-NH-(C_{q}H_{2q}O)ᵣ-R⁹
M für Wasserstoff, ein ein-, zwei- oder dreiwertiges Metallkation, Ammoniumion oder einen organischen Aminrest
a für 1/3, 1/2 oder 1
R⁹ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede (C_{q}H_{2q}O)-Einheit gleich oder verschieden 2, 3 oder 4 und
r für 0 bis 200
Z für O, NR¹⁶
R¹⁶ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H stehen, 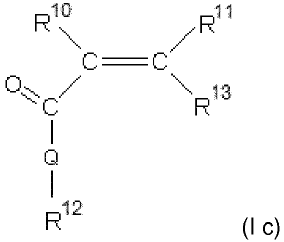
mit
R¹⁰ und R¹¹ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
R¹² gleich oder verschieden sowie repräsentiert durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR¹⁴_{b} mit n = 0, 1, 2, 3 oder 4 und b = 2 oder 3
R¹³ für H, -COOMₐ, -CO-O(C_{q}H_{2q}O)ᵣ-R⁹, -CO-NH-(C_{q}H_{2q}O)ᵣ-R⁹, wobei Mₐ, R⁹, q und r oben genannte Bedeutungen besitzen
R¹⁴ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.
Q gleich oder verschieden sowie repräsentiert durch NH, NR¹⁵ oder O; wobei R¹⁵ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

9. Polymer nach einem der Ansprüche 1 bis 8, **dadurch gekennzeichnet, dass** das Polymer pulverförmig vorliegt.

10. Polymer nach einem der Ansprüche 1 bis 9, **dadurch gekennzeichnet, dass** es sich bei dem ethylenisch ungesättigten Monomer (I) um mindestens eine Verbindung aus der Reihe Acrylsäure, Methacrylsäure, Crotonsäure, Itaconsäure, Maleinsäure, Fumarsäure, Vinylsulfonsäure, Allylsulfonsäure, Sulfoethylmethacrylat, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure, 2-Acrylamido-2,4,4-trimethylpentansulfonsäure, Vinylphosphonsäure, Allylphosphonsäure, N-(Meth)acrylamidoalkylphosphonsäuren und (Meth)acryloyloxyalkylphosphonsäuren handelt.

11. Polymer nach einem der Ansprüche 1 bis 10, **dadurch gekennzeichnet, dass** der Anteil des Monomeren (I) an dem Polymer 50 bis 90 Mol-% beträgt.

12. Polymer nach einem der Ansprüche 1 bis 11, **dadurch gekennzeichnet, dass** der Anteil des Monomeren (II) und der Anteil des Monomeren (III) zusammen an dem Polymer 10 bis 50 Mol-% beträgt.

13. Verwendung eines Polymers nach einem der Ansprüche 1 bis 12 als Zusatzmittel für anorganische Bindemittelzusammensetzungen.

14. Pulverförmige Zusammensetzung umfassend, bezogen auf die Gesamtmasse der Zusammensetzung
A) mindestens 20 Gew.-% eines anorganischen Bindemittels und
B) 0,01 bis 4 Gew.-% mindestens eines Polymers nach einem der Ansprüche 1 bis 12.

15. Pulverförmige Zusammensetzung nach Anspruch 14, **dadurch gekennzeichnet, dass** es sich um Calciumsulfat-Fließestrich handelt.

## Claims

1. Polymer obtainable by copolymerizing monomers comprising
(I) at least one ethylenically unsaturated monomer which comprises at least one acid group and
(II) at least one ethylenically unsaturated monomer having polyether groups of the structural unit (IIa),
-(CₐH₂ₐO)ₙ- (IIa)
where
n is an integer from 5 to 35,
a independently at each occurrence for each (CₐH₂ₐO) unit identically or differently is 2, 3 or 4, and
(III) at least one ethylenically unsaturated monomer having polyether groups of the structural unit (IIIa),
-(C_{b}H_{2b}O)ₘ- (IIIa)
where
m is an integer from 45 to 150,
b independently at each occurrence for each (C_{b}H_{2b}O) unit identically or differently is 2, 3 or 4, and
where the molar ratio of monomer (II) to monomer (III) is between 75:25 and 99.5:0.5.

2. Polymer according to Claim 1, **characterized in that** the acid group of the monomer (I) is at least one from the series consisting of carboxyl, phosphono, sulfino, sulfo, sulfamido, sulfoxy, sulfoalkyloxy, sulfinoalkyloxy, and phosphonooxy group.

3. Polymer according to Claim 1 or 2, **characterized in that** monomer (II) is represented with the general formula (IIb) 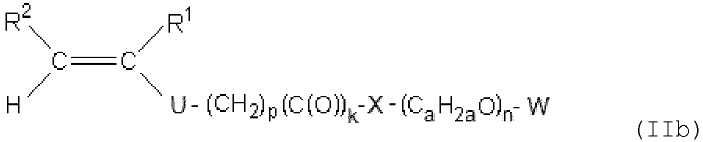 where
U is oxygen or a chemical bond,
p is an integer between 0 and 4,
X is oxygen, sulfur or a group NR³,
k is 0 or 1,
W is a hydrogen, a C₁-C₆ alkyl or an aryl radical or is the group Y-F, where
Y is a linear or branched alkylene group having 2 to 8 carbons and may carry a phenyl ring,
F is a 5- to 10-membered nitrogen heterocycle which is bonded via nitrogen and which as ring members, besides the nitrogen atom and besides carbon atoms, may have 1,
2 or 3 additional heteroatoms selected from oxygen, nitrogen, and sulfur, it being possible for the nitrogen ring members to have a group R⁴, and for 1 or 2 carbon ring members to be carbonyl group(s),
R¹, R², R³, and R⁴ independently of one another are hydrogen or an aliphatic hydrocarbon radical having 1 to 4 carbons, or benzyl, and
n and a possess the definitions stated for structural unit (IIa).

4. Polymer according to any of Claims 1 or 3, **characterized in that** monomer (III) is represented with the general formula (IIIb) 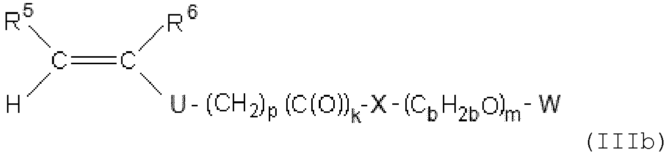 where
U is oxygen or a chemical bond,
p is an integer between 0 and 4,
X is oxygen, sulfur or a group NR³,
k is 0 or 1,
W is a hydrogen, a C₁-C₆ alkyl or an aryl radical or is the group Y-F, where
Y is a linear or branched alkylene group having 2 to 8 carbons and may carry a phenyl ring,
F is a 5- to 10-membered nitrogen heterocycle which is bonded via nitrogen and which as ring members, besides the nitrogen atom and besides carbon atoms, may have 1, 2 or 3 additional heteroatoms selected from oxygen, nitrogen, and sulfur, it being possible for the nitrogen ring members to have a group R⁴, and for 1 or 2 carbon ring members to be carbonyl group(s),
R³, R⁴, R⁵, and R⁶ independently of one another are hydrogen or an aliphatic hydrocarbon radical having 1 to 4 carbons, or benzyl, and
m and b possess the definitions stated for structural unit (IIIa).

5. Polymer according to either of Claims 3 and 4, **characterized in that**
U is oxygen,
p is 4,
X is oxygen,
k is 0, and
R¹, R², R⁵ and R⁶ independently of one another are hydrogen or a methyl group.

6. Polymer according to any of Claims 1 to 5, **characterized in that**
n is an integer from 20 to 30,
a independently at each occurrence for each (CₐH₂ₐO) unit identically or differently is 2 or 3.

7. Polymer according to any of Claims 1 to 6, **characterized in that**
m is an integer from 65 to 75,
b independently at each occurrence for each (C_{b}H_{2b}O) unit identically or differently is 2 or 3.

8. Polymer according to any of Claims 1 to 7, **characterized in that** the ethylenically unsaturated monomer (I) is represented by at least one of the following general formulae from the group consisting of (Ia), (Ib), and (Ic) 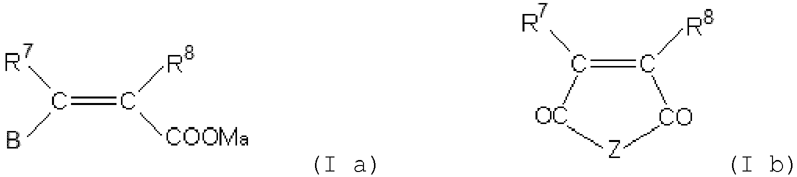 where
R⁷ and R⁸ independently of one another are hydrogen or an aliphatic hydrocarbon radical having 1 to 20 carbons, B is H, -COOMₐ, -CO-O(C_{q}H_{2q}O)ᵣ-R⁹, -CO-NH-(C_{q}H_{2q}O)ᵣ-R⁹,
M is hydrogen, a mono-, di- or trivalent metal cation, ammonium ion or an organic amine radical,
a is 1/3, 1/2 or 1,
R⁹ is hydrogen, an aliphatic hydrocarbon radical having 1 to 20 carbons, a cycloaliphatic hydrocarbon radical having 5 to 8 carbons, an optionally substituted aryl radical having 6 to 14 carbons,
q independently at each occurrence for each (C_{q}H_{2q}O) unit identically or differently is 2, 3 or 4, and
r is 0 to 200,
Z is O, NR¹⁶,
R¹⁶ independently at each occurrence is identical or different and represented by a branched or unbranched C₁ to C₁₀ alkyl radical, C₅ to C₈ cycloalkyl radical, aryl radical, heteroaryl radical or H, 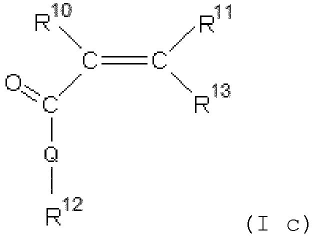
where
R¹⁰ and R¹¹ independently of one another are hydrogen or an aliphatic hydrocarbon radical having 1 to 20 carbons, a cycloaliphatic hydrocarbon radical having 5 to 8 carbons, an optionally substituted aryl radical having 6 to 14 carbons,
R¹² is identical or different and represented by (CₙH₂ₙ)-SO₃H with n = 0, 1, 2, 3 or 4, (CₙH₂ₙ)-OH with n = 0, 1, 2, 3 or 4; (CₙH₂ₙ)-PO₃H₂ with n = 0, 1, 2, 3 or 4, (CₙH₂ₙ)-OPO₃H₂ with n = 0, 1, 2, 3 or 4, (C₆H₄)-SO₃H, (C₆H₄)-PO₃H₂, (C₆H₄)-OPO₃H₂ and (CₙH₂ₙ)-NR¹⁴_{b} with n = 0, 1, 2, 3 or 4 and b = 2 or 3,
R¹³ is H, -COOMₐ, -CO-O(C_{q}H_{2q}O)ᵣ-R⁹, -CO-NH-(C_{q}H_{2q}O)ᵣ-R⁹, where Mₐ, R⁹, q, and r possess definitions stated above, R¹⁴ is hydrogen, an aliphatic hydrocarbon radical having 1 to 10 carbons, a cycloaliphatic hydrocarbon radical having 5 to 8 carbons, an optionally substituted aryl radical having 6 to 14 carbons,
Q is identical or different and represented by NH, NR¹⁵ or O;
where R¹⁵ is an aliphatic hydrocarbon radical having 1 to 10 carbons, a cycloaliphatic hydrocarbon radical having 5 to 8 carbons or an optionally substituted aryl radical having 6 to 14 carbons.

9. Polymer according to any of Claims 1 to 8, **characterized in that** the polymer is in powder form.

10. Polymer according to any of Claims 1 to 9, **characterized in that** the ethylenically unsaturated monomer (I) is at least one compound from the series consisting of acrylic acid, methacrylic acid, crotonic acid, itaconic acid, maleic acid, fumaric acid, vinylsulfonic acid, allylsulfonic acid, sulfoethyl methacrylate, 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid, 2-acrylamido-2,4,4-trimethylpentanesulfonic acid, vinylphosphonic acid, allylphosphonic acid, N-(meth)acrylamidoalkylphosphonic acids, and (meth)acryloyloxyalkylphosphonic acids.

11. Polymer according to any of Claims 1 to 10, **characterized in that** the fraction of the monomer (I) in the polymer is 50 to 90 mol%.

12. Polymer according to any of Claims 1 to 11, **characterized in that** the fraction of the monomer (II) and the fraction of the monomer (III) together in the polymer are 10 to 50 mol%.

13. Use of a polymer according to any of Claims 1 to 12 as an admixture for inorganic binder compositions.

14. Composition in powder form, comprising, based on the total mass of the composition,
A) at least 20 wt% of an inorganic binder and
B) 0.01 to 4 wt% of at least one polymer according to any of Claims 1 to 12.

15. Composition in powder form according to Claim 14, **characterized in that** it comprises self-leveling calcium sulfate screed.

## Revendications

1. Polymère pouvant être obtenu par copolymérisation de monomères, comprenant :
(I) au moins un monomère éthyléniquement insaturé, qui comprend au moins un groupe acide,
et
(II) au moins un monomère éthyléniquement insaturé contenant des groupes polyéther de l'unité structurale (IIa)
-(CₐH₂ₐO)ₙ- (IIa)
dans laquelle
n représente un nombre entier de 5 à 35,
les a représentent indépendamment les uns des autres pour chaque unité (CₐH₂ₐO) de manière identique ou différente 2, 3 ou 4, et
(III) au moins un monomère éthyléniquement insaturé contenant des groupes polyéther de l'unité structurale (IIIa)
(C_{b}H_{2b}O) (IIIa)
dans laquelle
m représente un nombre entier de 45 à 150,
les b représentent indépendamment les uns des autres pour chaque unité (C_{b}H_{2b}O) de manière identique ou différente 2, 3 ou 4,
le rapport molaire entre le monomère (II) et le monomère (III) étant compris entre 75 sur 25 et 99,5 sur 0,5.

2. Polymère selon la revendication 1, **caractérisé en ce que** le groupe acide du monomère (I) consiste en au moins un de la série constituée par les groupes carboxy, phosphono, sulfino, sulfo, sulfamido, sulfoxy, sulfoalkyloxy, sulfinoalkyloxy et phosphonooxy.

3. Polymère selon la revendication 1 ou 2, **caractérisé en ce que** le monomère (II) est représenté par la formule générale (IIb) : 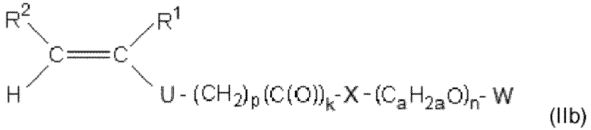 dans laquelle
U signifie l'oxygène ou une liaison chimique,
p signifie un nombre entier compris entre 0 et 4,
X signifie l'oxygène, le soufre ou un groupe NR³,
k signifie 0 ou 1,
W signifie un radical hydrogène, alkyle en C₁-C₆ ou aryle, ou signifie le groupe Y-F,
Y représentant un groupe alkylène linéaire ou ramifié de 2 à 8 atomes C, qui peut porter un cycle phényle,
F représentant un hétérocycle azoté de 5 à 10 chaînons relié par l'azote, qui peut comprendre en tant qu'éléments de cycle en plus de l'atome d'azote et en plus des atomes de carbone 1, 2 ou 3 hétéroatomes supplémentaires, choisis parmi l'oxygène, l'azote et le soufre, les éléments de cycle azote pouvant comprendre un groupe R⁴ et 1 ou 2 éléments de cycle carbone pouvant se présenter sous la forme d'un groupe carbonyle,
R¹, R², R³ et R⁴ représentent indépendamment les uns des autres l'hydrogène ou un radical hydrocarboné aliphatique de 1 à 4 atomes C ou benzyle, et
n et a ont les significations indiquées pour l'unité structurale (IIa).

4. Polymère selon l'une quelconque des revendications 1 à 3, **caractérisé en ce que** le monomère (III) est représenté par la formule générale (IIIb) : 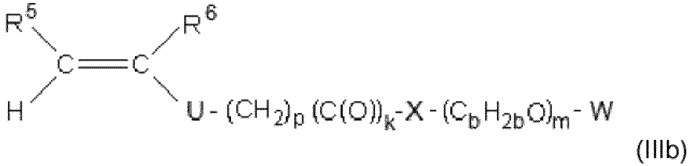 dans laquelle
U signifie l'oxygène ou une liaison chimique,
p signifie un nombre entier compris entre 0 et 4,
X signifie l'oxygène, le soufre ou un groupe NR³,
k signifie 0 ou 1,
W signifie un radical hydrogène, alkyle en C₁-C₆ ou aryle, ou signifie le groupe Y-F,
Y représentant un groupe alkylène linéaire ou ramifié de 2 à 8 atomes C, qui peut porter un cycle phényle,
F représentant un hétérocycle azoté de 5 à 10 chaînons relié par l'azote, qui peut comprendre en tant qu'éléments de cycle en plus de l'atome d'azote et en plus des atomes de carbone 1, 2 ou 3 hétéroatomes supplémentaires, choisis parmi l'oxygène, l'azote et le soufre, les éléments de cycle azote pouvant comprendre un groupe R⁴ et 1 ou 2 éléments de cycle carbone pouvant se présenter sous la forme d'un groupe carbonyle, R³, R⁴, R⁵ et R⁶ représentent indépendamment les uns des autres l'hydrogène ou un radical hydrocarboné aliphatique de 1 à 4 atomes C ou benzyle, et
m et b ont les significations indiquées pour l'unité structurale (IIIa).

5. Polymère selon l'une quelconque des revendications 3 ou 4, **caractérisé en ce que**
U signifie l'oxygène,
p représente 4,
X signifie l'oxygène,
k représente 0, et
R¹, R², R⁵ et R⁶ représentent indépendamment les uns des autres l'hydrogène ou un groupe méthyle.

6. Polymère selon l'une quelconque des revendications 1 à 5, **caractérisé en ce que**
n représente un nombre entier de 20 à 30,
les a représentent indépendamment les uns des autres pour chaque unité (CₐH₂ₐO) de manière identique ou différente 2 ou 3.

7. Polymère selon l'une quelconque des revendications 1 à 6, **caractérisé en ce que**
m représente un nombre entier de 65 à 75,
les b représentent indépendamment les uns des autres pour chaque unité (C_{b}H_{2b}O) de manière identique ou différente 2 ou 3.

8. Polymère selon l'une quelconque des revendications 1 à 7, **caractérisé en ce que** le monomère éthyléniquement insaturé (I) est représenté par au moins une des formules générales suivantes du groupe (Ia), (Ib) et (Ic) : 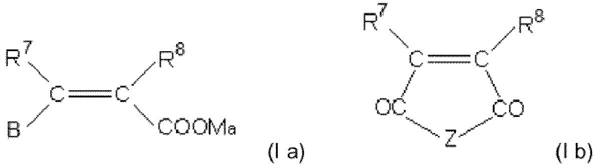 dans lesquelles
R⁷ et R⁸ représentent indépendamment l'un de l'autre l'hydrogène ou un radical hydrocarboné aliphatique de 1 à 20 atomes C,
B représente H, -COOMₐ, -CO-O(C_{q}H_{2q}O)ᵣ-R⁹, -CO-NH-(C_{q}H_{2q}O)ᵣ-R⁹,
M représente l'hydrogène, un cation métallique mono-, bi- ou trivalent, un ion ammonium ou un radical amine organique,
a représente 1/3, 1/2 ou 1,
R⁹ représente l'hydrogène, un radical hydrocarboné aliphatique de 1 à 20 atomes C, un radical hydrocarboné cycloaliphatique de 5 à 8 atomes C, un radical aryle de 6 à 14 atomes C éventuellement substitué,
les q représentent indépendamment les uns des autres pour chaque unité (C_{q}H_{2q}O) de manière identique ou différente 2, 3 ou 4, et
r représente 0 à 200,
Z représente O, NR¹⁶,
les R¹⁶ sont indépendamment les uns des autres identiques ou différents, et représentés par un radical alkyle en C₁ à C₁₀ ramifié ou non ramifié, un radical cycloalkyle en C₅ à C₈, un radical aryle, un radical hétéroaryle ou H, 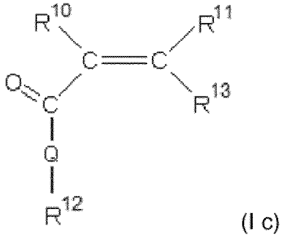
dans laquelle
R¹⁰ et R¹¹ représentent indépendamment l'un de l'autre l'hydrogène ou un radical hydrocarboné aliphatique de 1 à 20 atomes C, un radical hydrocarboné cycloaliphatique de 5 à 8 atomes C, un radical aryle de 6 à 14 atomes C éventuellement substitué,
les R¹² sont identiques ou différents, et représentés par (CₙH₂ₙ)-SO₃H avec n = 0, 1, 2, 3 ou 4, (CₙH₂ₙ)-OH avec n = 0, 1, 2, 3 ou 4 ; (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄)-PO₃H₂, (C₆H₄)-OPO₃H₂ et (CₙH₂ₙ)-NR¹⁴_{b} avec n = 0, 1, 2, 3 ou 4, et b = 2 ou 3,
R¹³ représente H, -COOMₐ, -CO-O(C_{q}H_{2q}O)ᵣ-R⁹, -CO-NH-(C_{q}H_{2q}O)ᵣ-R⁹,
Mₐ, R⁹, q et r ayant les significations indiquées précédemment,
R¹⁴ représente l'hydrogène, un radical hydrocarboné aliphatique de 1 à 10 atomes C, un radical hydrocarboné cycloaliphatique de 5 à 8 atomes C, un radical aryle de 6 à 14 atomes C éventuellement substitué,
les Q sont identiques ou différents, et représentés par NH, NR¹⁵ ou O,
R¹⁵ représentant un radical hydrocarboné aliphatique de 1 à 10 atomes C, un radical hydrocarboné cycloaliphatique de 5 à 8 atomes C ou un radical aryle éventuellement substitué de 6 à 14 atomes C.

9. Polymère selon l'une quelconque des revendications 1 à 8, **caractérisé en ce que** le polymère se présente sous la forme de poudre.

10. Polymère selon l'une quelconque des revendications 1 à 9, **caractérisé en ce que** le monomère éthyléniquement insaturé (I) consiste en au moins un composé de la série constituée par l'acide acrylique, l'acide méthacrylique, l'acide crotonique, l'acide itaconique, l'acide maléique, l'acide fumarique, l'acide vinylsulfonique, l'acide allylsulfonique, le méthacrylate de sulfoéthyle, l'acide 2-acrylamido-2-méthylpropane-sulfonique (AMPS), l'acide 2-méthacrylamido-2-méthylpropane-sulfonique, l'acide 2-acrylamidobutane-sulfonique, l'acide 3-acrylamido-3-méthylbutane-sulfonique, l'acide 2-acrylamido-2,4,4-triméthylpentane-sulfonique, l'acide vinylphosphonique, l'acide allylphosphonique, les acides N-(méth)acrylamidoalkylphosphoniques et les acides (méth)acryloyloxyalkylphosphoniques.

11. Polymère selon l'une quelconque des revendications 1 à 10, **caractérisé en ce que** la proportion du monomère (I) dans le polymère est de 50 à 90 % en moles.

12. Polymère selon l'une quelconque des revendications 1 à 11, **caractérisé en ce que** la proportion du monomère (II) et la proportion du monomère (III) ensemble dans le polymère sont de 10 à 50 % en moles.

13. Utilisation d'un polymère selon l'une quelconque des revendications 1 à 12 en tant qu'additif pour des compositions de liants inorganiques.

14. Composition en poudre comprenant, par rapport à la masse totale de la composition :
A) au moins 20 % en poids d'un liant inorganique et
B) 0,01 à 4 % en poids d'au moins un polymère selon l'une quelconque des revendications 1 à 12.

15. Composition en poudre selon la revendication 14, **caractérisée en ce qu'**il s'agit d'une chape fluide de sulfate de calcium.
